# FASCICULE DE BREVET EUROPEEN

(11) **EP 4 208 634 B1**
(45) Date de publication et mention de la délivrance du brevet: **17.12.2025**
(21) Numéro de dépôt: 21778180.6
(22) Date de dépôt: 03.09.2021
(51) Int. Cl.: F02C 7/045, F01D 15/10

(54) **TURBOMACHINE HYBRIDE POUR AERONEF AVEC UN SYSTEME DE CONTROLE ACOUSTIQUE ACTIF**
HYBRIDTURBOMASCHINE FÜR FLUGZEUGE MIT EINEM AKTIVEN AKUSTISCHEN STEUERSYSTEM
HYBRID TURBOMACHINE FOR AIRCRAFT WITH AN ACTIVE ACOUSTIC CONTROL SYSTEM

(30) Priorité: 04.09.2020 FR 2009010
(43) Date de publication de la demande: 12.07.2023
(73) Titulaire: Safran Helicopter Engines, 64510 Bordes (FR); Safran Electrical & Power, 31702 Blagnac (FR); Safran Power Units, 31200 Toulouse (FR)
(72) Inventeur: THIRIET, Romain, Jean, Gilbert, 77550 MOISSY-CRAMAYEL (FR); BOUTY, Eric, Jean-Louis, 77550 MOISSY-CRAMAYEL (FR); REAL, Denis, Antoine, Julien, 77550 MOISSY-CRAMAYEL (FR); CHAU, Valéry, 77550 MOISSY-CRAMAYEL (FR)
(74) Mandataire: Cabinet Beau de Loménie
(86) Numéro de dépôt international: PCT/FR2021/051517
(87) Numéro de publication internationale: WO 2022/049352

(56) Documents cités:
- JP-A- 2001 193 479
- US-A- 4 044 203
- US-A1- 2001 023 582
- US-A1- 2018 301 136

## Description

### Domaine Technique

L'invention concerne le domaine des bruits de systèmes de propulsion d'un aéronef, et plus particulièrement un contrôle acoustique actif pour un turbogénérateur hybride d'un aéronef tel qu'un aéronef à décollage vertical.

### Technique antérieure

L'essor du nouveau marché des taxis urbains volants nécessite des architectures propulsives distribuées électriquement dites hybrides série, c'est-à-dire combinant à la fois deux sources propulsives distinctes : un turbogénérateur composé d'une turbomachine et d'une génératrice, et un pack de batteries.

La démocratisation de ce type d'aéronef dans les grands centres urbains ne peut se faire sans la démonstration d'une signature acoustique optimisée sur le turbogénérateur.

Les sources de bruit d'un turbogénérateur sont : le bruit de roulement, le bruit de raie, ainsi que le bruit de combustion et le bruit de turbine. Le bruit de roulement est le bruit émis par la génératrice entrainée à haute vitesse par la turbomachine. Il est généré d'une part par les vibrations des ensembles tournants, d'autre part par les contacts internes au roulement. Le bruit de raie lié au compresseur correspond au bruit émis par l'entrée d'air du turbogénérateur. Le bruit de combustion et le bruit de turbine correspondent au bruit émis par l'échappement du turbogénérateur (bruit à large bande).

Le principe du contrôle acoustique actif est connu depuis longtemps. Toutefois son application à des turbomachines se heurte à deux problèmes essentiels : la complexité du champ acoustique à atténuer, et la masse embarquée nécessaire pour un fonctionnement efficace.

Pour une turbomachine configurée en turbogénérateur, la proximité des différents éléments et notamment d'une source de puissance électrique permet, à moindre frais, d'héberger un système de contrôle au plus près de la génératrice et de répondre à la problématique de la pénalité de masse.

Comme expliqué dans l'article intitulé « Identification of broadband noise sources of a turbo-shaft engine » par Ulf Tapken et al. (AIAA-2014-3321), le contrôle du bruit à large bande de l'éjection peut être réalisé avec un système simple comprenant par exemple un haut-parleur, un microphone et un contrôleur monovoie intégré avec contrôle en feedback. Un tel système permet un contrôle du bruit jusqu'à environ 1500 Hz avec une bonne atténuation, c'est-à-dire supérieur à 15 dB, car sa structure spatiale est très simple.

Le contrôle de la raie du compresseur nécessite l'utilisation de plusieurs haut-parleurs, et donc l'utilisation d'un système multi-voies comme indiqué dans l'article intitulé « Active Control of Fan Tone Noise from Aircraft Engines" par R. Maier et al. (7th AIAA/CEAS Aeroacoustics Conference, 28-30 May 2001).

Il existe depuis plusieurs années des boitiers embarqués à bord d'aéronef équipés de turbopropulseurs pour réduire de façon active le bruit perçu dans la cabine. Ces systèmes sont lourds.

JP 2001/193479 décrit une turbomachine selon le préambule de la revendication 1.

### Exposé de l'invention

L'invention vise à proposer une solution de contrôle des bruits acoustiques émis par un turbogénérateur en limitant la masse relative au système de contrôle acoustique. Dans un objet de l'invention, il est proposé une turbomachine hybride selon la revendication 1 comprenant un générateur électrique, un générateur de gaz doté d'une entrée d'air et d'un échappement et un système de contrôle acoustique comprenant une unité de commande et une pluralité de haut-parleurs.

Selon une caractéristique générale de l'invention, au moins un premier haut-parleur est disposé sur le générateur électrique, et/ou au moins un deuxième haut-parleur est disposé sur l'entrée d'air du générateur de gaz, et/ou au moins un troisième haut-parleur est disposé sur l'échappement du générateur de gaz.

Le système de contrôle acoustique permet ainsi d'atténuer activement le bruit généré par la turbomachine hybride perçu au sol et en cabine. Les ondes sonores émises par les haut-parleurs du système génèrent des ondes acoustiques destinées à produire des ondes acoustiques venant compenser, voire annuler, les ondes générées par la turbomachine.

De préférence, le système de contrôle acoustique comprend au moins un premier haut-parleur disposé sur le générateur électrique, et au moins un deuxième haut-parleur disposé sur l'entrée d'air du générateur de gaz, et au moins un troisième haut-parleur disposé sur l'échappement du générateur de gaz.

Une configuration avec des haut-parleurs à la fois sur le générateur électrique, sur l'entrée d'air et sur l'échappement permet de maximiser la réduction sonore.

Selon un premier aspect de la turbomachine hybride, le système de contrôle acoustique peut comprendre au moins un premier microphone disposé sur le générateur électrique et associé audit au moins un premier microphone, et/ou au moins un deuxième microphone disposé sur l'entrée d'air du générateur de gaz et associé audit au moins un deuxième microphone, et/ou au moins un troisième microphone disposé sur l'échappement du générateur de gaz et associé audit au moins un troisième microphone, le système de contrôle acoustique comprenant en outre un module de contrôle configuré pour déterminer, pour chaque haut-parleur, un signal à émettre vers le haut-parleur en fonction du positionnement du haut-parleur et du signal recueilli par ledit au moins un microphone auquel il est associé.

Selon un deuxième aspect de la turbomachine hybride, la turbomachine peut comprendre au moins un conduit d'entrée d'air définissant l'entrée d'air du générateur de gaz et au moins un conduit d'échappement définissant l'échappement du générateur de gaz, ledit au moins un deuxième haut-parleur étant fixé sur une paroi dudit au moins un conduit d'entrée d'air, et ledit au moins un troisième haut-parleur étant fixé sur une paroi dudit au moins un conduit d'échappement.

Selon un troisième aspect de la turbomachine hybride, ledit au moins un deuxième microphone peut être fixé sur une paroi dudit au moins un conduit d'entrée d'air, et ledit au moins un troisième microphone étant fixé sur une paroi dudit au moins un conduit d'échappement.

Selon un quatrième aspect de la turbomachine hybride, l'unité de commande du système de contrôle acoustique peut comprendre des amplificateurs analogiques dotés de convertisseurs analogique-numérique pour émettre des signaux traités vers les haut-parleurs et recueillir des signaux des microphones, et des contrôleurs numériques de type réseau logique programmable ou processeur de signal numérique pour acquérir et traiter les signaux numériques.

Selon un cinquième aspect de la turbomachine hybride, l'unité de commande du système de contrôle acoustique peut comprendre en outre une base de données comportant des modèles simples de bruits générés en fonction des paramètres de fonctionnement de la turbomachine, et un module de détermination configuré pour déterminer, pour chaque haut-parleur, un signal à émettre vers le haut-parleur en fonction des paramètres de fonctionnement de la turbomachine et en fonction du positionnement du haut-parleur.

La base de données peut être utilisée dans une configuration du système de contrôle acoustique dépourvue de tout microphone pour alléger le système et ainsi la turbomachine, le système fonctionnant à partir d'un système prédictif de bruit à partir des modèles préenregistrés et des paramètres de fonctionnement de la turbomachine.

La base de données peut également être utilisée dans une configuration du système de contrôle acoustique dotée de microphones, la base de données étant utilisée en cas de panne d'un microphone.

Selon un sixième aspect de la turbomachine hybride, la turbomachine hybride peut comprendre une communication filaire entre l'unité de commande et les haut-parleurs.

Dans une variante, la turbomachine hybride peut comprendre une communication sans fil entre l'unité de commande et les haut-parleurs.

L'unité de commande du système de contrôle acoustique est montée sur le générateur électrique.

Le montage de l'unité de commande du système de contrôle acoustique sur le générateur électrique permet ainsi de réduire la longueur des connexions et ainsi réduire la masse totale du système.

L'unité de commande est configurée, en outre, pour réaliser une conversion électrique alternatif-continu de la force électromotrice du générateur électrique en une tension réglable continue destinée à être distribuée à des charges ou à des moyens de stockage d'énergie.

Grâce à sa configuration pour réaliser une conversion électrique alternatif-continu de la force électromotrice du générateur électrique en une tension réglable continue destinée à être distribuée à des charges ou à des moyens de stockage d'énergie, l'unité de commande comprend à la fois les fonctions d'une unité de commande de redressement actif, ou ARCU pour « Active Rectifier Control Unit » en anglais, et les fonctions de commande de l'unité de traitement acoustique.

En outre, l'unité de commande peut également être configurée pour réaliser au moins une fonction supplémentaire parmi au moins une conversion d'une source de puissance, une acquisition de données relatives au générateur électrique, et une gestion de l'alimentation basse tension pour alimenter un étage de commande.

Selon un neuvième aspect de la turbomachine hybride, le système de contrôle acoustique peut être intégré à un système de commande du générateur électrique.

Selon un dixième aspect de la turbomachine hybride, le générateur électrique peut être une machine électrique réversible.

Le générateur électrique permet ainsi une conversion bidirectionnelle de l'énergie mécanique-électrique, c'est-à-dire une conversion mécanique-électrique et une conversion électrique-mécanique. Le générateur électrique peut générer un courant électrique polyphasé, par exemple triphasé. Le générateur électrique peut être ainsi un moteur-générateur configuré pour fonctionner à la fois en mode générateur dans des premières conditions et en mode moteur dans des secondes conditions. Le générateur électrique peut être une machine électrique synchrone ou asynchrone.

Dans un autre objet de l'invention, il est proposé un aéronef comprenant un calculateur électronique de régulation de l'aéronef et au moins une turbomachine tel que défini ci-dessus et associée ou intégrée audit calculateur électronique de régulation de l'aéronef, également connu sous l'acronyme EECU anglais pour « Electronic Engine Control Unit ».

Ledit calculateur électronique de régulation peut être intégré à un dispositif de régulation des turbomachines de l'aéronef, également connu sous l'anonyme anglais FADEC qui signifie en anglais « Full Authority Digital Engine Control ».

La turbomachine hybride peut comprendre en outre un système de régulation de l'aéronef comportant principalement un système de carburant configuré pour pomper du carburant dans un réservoir de l'aéronef et pour l'injecter dans la chambre de combustion de l'aéronef ainsi que ledit calculateur électronique de régulation de l'aéronef (EECU).

Selon un aspect de l'aéronef, l'unité de commande de la turbomachine peut être configurée pour assurer la gestion de mesures fournies par des capteurs et une commande d'un système de démarrage à partir d'un module de gestion du réseau de bord de l'aéronef.

L'unité de commande peut en outre être configurée pour contrôler des paramètres du moteur tels que le débit carburant sur la base d'une vitesse de rotation du générateur de gaz ou du générateur électrique et d'autres paramètres, comme la fréquence du générateur électrique ou une anticipation de la charge pour chaque chaîne de propulsion électrique. L'unité de commande peut être configurée pour contrôler un débit de carburant alimentant la turbomachine sur la base d'une vitesse de rotation du générateur de gaz ou du générateur électrique, de la fréquence du générateur électrique ou d'une anticipation de charge pour chaque chaîne de propulsion électrique.

### Brève description des dessins

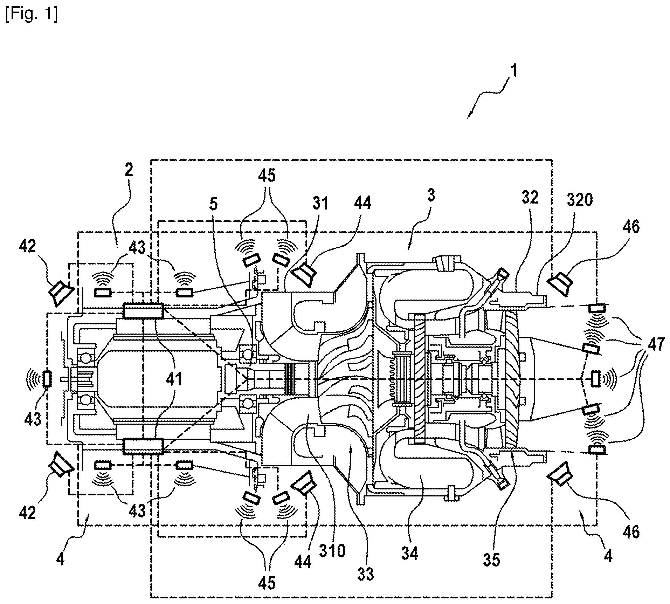

[Fig. 1] La figure 1 est une vue schématique en coupe d'une turbomachine hybride selon un mode de réalisation de l'invention.

### Description des modes de réalisation

Sur la figure 1 est représentée schématiquement une vue en coupe d'une turbomachine hybride 1 selon un mode de réalisation de l'invention.

La turbomachine hybride 1 comprend un générateur électrique 2, un générateur de gaz 3 et un système de contrôle acoustique 4. Le générateur électrique 2 est mécaniquement raccordé au générateur de gaz 3 via un arbre mécanique 5.

Le générateur électrique est une machine électrique réversible. Il permet ainsi une conversion bidirectionnelle de l'énergie mécanique-électrique, c'est-à-dire une conversion mécanique-électrique et une conversion électrique-mécanique. Le générateur électrique peut générer un courant électrique triphasé.

Le générateur de gaz 3 comporte une entrée d'air 31, un échappement 32, au moins un étage de compression 33, un étage de combustion 34 et au moins un étage de turbine 35 éjectant l'air chaud via l'échappement 32.

L'entrée d'air 31 comporte au moins un conduit d'entrée d'air 310 définissant l'entrée d'air 31 du générateur de gaz 3 et un conduit d'échappement 320 définissant l'échappement 32 du générateur de gaz 3.

Dans l'exemple de mode de réalisation illustré sur la figure 1, le système de contrôle acoustique 4 comprend une unité de commande 41 montée sur le générateur électrique 2, deux premiers microphones 42 et quatre premiers haut-parleurs 43 disposés autour du générateur électrique 2, deux deuxièmes microphones 44 et quatre deuxièmes haut-parleurs 45 disposés sur l'entrée d'air 31 du générateur de gaz 3, et deux troisièmes microphones 46 et cinq troisième haut-parleurs 47 disposés sur l'échappement 32 du générateur de gaz 3. L'unité de commande 41 est électriquement couplée aux microphones 42, 44 et 46 et aux haut-parleurs 43, 45 et 47 par des câbles électriques permettant de réaliser une liaison filaire pour la transmission des signaux.

Les haut-parleurs et les microphones peuvent être de type piézo-électrique, électrodynamiques, ou plasma.

Plus précisément, les premiers haut-parleurs 43 et les premiers microphones 42 sont fixés sur le générateur électrique 2 ou sur un carter à l'intérieur duquel est logé le générateur électrique 2, les deuxièmes microphones 44 et les deuxièmes haut-parleurs 45 sont fixés sur les conduits d'entrée d'air 310 et les troisièmes microphones 46 et les troisièmes haut-parleurs 47 sont fixés sur le conduit d'échappement 320.

L'unité de commande 41 du système de contrôle acoustique 4 comprend des amplificateurs analogiques dotés de convertisseurs analogique-numérique pour émettre des signaux traités vers les haut-parleurs 43, 45 et 47 et recueillir des signaux des microphones 42, 44 et 46, et des contrôleurs numériques de type réseau logique programmable ou processeur de signal numérique pour acquérir et traiter les signaux numériques.

L'unité de commande 41 du système de contrôle acoustique comprend un module de contrôle configuré pour déterminer, pour chaque haut-parleur 43, 45 et 47, un signal à émettre vers le haut-parleur en fonction du positionnement du haut-parleur et du signal recueilli par le microphone 42, 44 et 46 auquel il est associé.

Pour parer à l'éventualité d'une panne d'un des microphones 42, 44, 46, l'unité de commande 41 du système de contrôle acoustique 4 comprend en outre une base de données comportant des modèles simples de bruits générés en fonction des paramètres de fonctionnement de la turbomachine 1, et un module de détermination configuré pour déterminer, pour chaque haut-parleur 43, 45 et 47, un signal à émettre vers le haut-parleur en fonction des paramètres de fonctionnement de la turbomachine 1 et en fonction du positionnement du haut-parleur.

Le système de contrôle acoustique 4 permet ainsi d'atténuer activement le bruit généré par la turbomachine hybride 1 et perçu au sol et en cabine. Les ondes sonores émises par les haut-parleurs 43, 45 et 47 du système 4 génèrent des ondes acoustiques en opposition de phase avec les ondes captées par les microphones 42, 44 et 46 pour générer des interférences destructrices avec les ondes générées par la turbomachine 1.

La turbomachine 1 est destinée à être monté sur un aéronef comprenant un calculateur électronique de régulation de l'aéronef également connu sous l'acronyme EECU anglais pour « Electronic Engine Control Unit ». La turbomachine 1 est soit associée soit intégrée au calculateur électronique de régulation de l'aéronef. Le calculateur électronique de régulation est de préférence intégré à un dispositif de régulation des turbomachines de l'aéronef, également connu sous l'anonyme anglais FADEC qui signifie en anglais « Full Authority Digital Engine Control ».

En outre, l'unité de commande 41 de la turbomachine 1 est configurée pour assurer la gestion de mesures fournies par des capteurs et une commande d'un système de démarrage à partir d'un module de gestion du réseau de bord de l'aéronef.

L'unité de commande 41 est configurée pour contrôler un débit de carburant alimentant la turbomachine 1 sur la base d'une vitesse de rotation du générateur de gaz 3 ou du générateur électrique 2, de la fréquence du générateur électrique 2 ou d'une anticipation de charge pour chaque chaîne de propulsion électrique.

## Revendications

1. Turbomachine hybride (1) comprenant un générateur électrique (2), un générateur de gaz (3) doté d'une entrée d'air (31) et d'un échappement (32) et un système de contrôle acoustique (4) comprenant une unité de commande (41), au moins un premier haut-parleur (43) disposé sur le générateur électrique (2), et/ou au moins un deuxième haut-parleur (45) disposé sur l'entrée d'air du générateur de gaz (31), et/ou au moins un troisième haut-parleur (47) disposé sur l'échappement (32) du générateur de gaz (3), **caractérisé en ce que** l'unité de commande (41) du système de contrôle acoustique (4) est montée sur le générateur électrique (2) et est configurée pour réaliser une conversion électrique alternatif-continu de la force électromotrice du générateur électrique (2) en une tension réglable continue destinée à être distribuée à des charges ou à des moyens de stockage d'énergie.

2. Turbomachine hybride (1) selon la revendication 1, dans laquelle le système de contrôle acoustique (4) comprend au moins un premier microphone (42) disposé sur le générateur électrique (2) et associé audit au moins un premier haut-parleur (43), et/ou au moins un deuxième microphone (44) disposé sur l'entrée d'air (31) du générateur de gaz (3) et associé audit au moins un deuxième haut-parleur (45), et/ou au moins un troisième microphone (46) disposé sur l'échappement (32) du générateur de gaz (3) et associé audit au moins un troisième haut-parleur (47), l'unité de commande (41) du système de contrôle acoustique (4) comprenant en outre un module de contrôle configuré pour déterminer, pour chaque haut-parleur (43, 45, 47), un signal à émettre vers le haut-parleur (43, 45, 47) en fonction du positionnement du haut-parleur (43, 45, 47) et du signal recueilli par ledit au moins un microphone (42, 44, 46) auquel il est associé.

3. Turbomachine hybride (1) selon l'une des revendications 1 ou 2, comprenant au moins un conduit d'entrée d'air (310) définissant l'entrée d'air (31) du générateur de gaz (3) et au moins un conduit d'échappement (320) définissant l'échappement (32) du générateur de gaz (3), ledit au moins un deuxième haut-parleur (45) étant fixé sur une paroi dudit au moins un conduit d'entrée d'air (31), et ledit au moins un troisième haut-parleur (47) étant fixé sur une paroi dudit au moins un conduit d'échappement (320).

4. Turbomachine hybride (1) selon la revendication 3 en combinaison avec la revendication 2, dans laquelle ledit au moins un deuxième microphone (44) est fixé sur une paroi dudit au moins un conduit d'entrée d'air (310), et ledit au moins un troisième microphone (46) est fixé sur une paroi dudit au moins un conduit d'échappement (320).

5. Turbomachine hybride (1) selon la revendication 2 prise en combinaison avec l'une des revendications 3 ou 4, dans laquelle l'unité de commande (41) du système de contrôle acoustique (4) comprend des amplificateurs analogiques dotés de convertisseurs analogique-numérique pour émettre des signaux traités vers les haut-parleurs (43, 45, 47) et recueillir des signaux des microphones (42, 44, 46), et des contrôleurs numériques de type réseau logique programmable ou processeur de signal numérique pour acquérir et traiter les signaux numériques.

6. Turbomachine hybride (1) selon l'une des revendications 1 à 5, dans laquelle l'unité de commande (41) du système de contrôle acoustique (4) comprend en outre une base de données comportant des modèles simples de bruits générés en fonction des paramètres de fonctionnement de la turbomachine (1), et un module de détermination configuré pour déterminer, pour chaque haut-parleur (43, 45, 47), un signal à émettre vers le haut-parleur (43, 45, 47) en fonction des paramètres de fonctionnement de la turbomachine (1) et en fonction du positionnement du haut-parleur (43, 45, 47).

7. Turbomachine hybride (1) selon l'une des revendications 1 à 6, comprenant une communication filaire entre l'unité de commande (41) et les haut-parleurs (43, 45, 47).

8. Turbomachine hybride (1) selon l'une des revendications 1 à 6, comprenant une communication sans fil entre l'unité de commande (41) et les haut-parleurs (43, 45, 47).

9. Turbomachine hybride (1) selon l'une des revendications 1 à 8, dans laquelle le système de contrôle acoustique (4) est intégré à un système de commande du générateur électrique (2).

10. Turbomachine hybride (1) selon l'une des revendications 1 à 9, dans laquelle le générateur électrique (2) est une machine électrique réversible.

11. Aéronef comprenant un calculateur électronique de régulation de l'aéronef et au moins une turbomachine hybride (1) selon l'une des revendications 1 à 10 associée ou intégrée audit calculateur électronique de régulation.

12. Aéronef selon la revendication 11, dans lequel ledit calculateur électronique de régulation est intégré à un dispositif de régulation des turbomachines de l'aéronef.

13. Aéronef selon l'une des revendications 10 à 12, dans lequel l'unité de commande (41) est configurée pour assurer la gestion des mesures fournies par des capteurs et une commande d'un système de démarrage de la turbomachine (1) à partir d'un module de gestion du réseau de bord de l'aéronef.

14. Aéronef selon l'une des revendications 10 à 13, dans lequel l'unité de commande (41) est configurée pour contrôler un débit de carburant alimentant la turbomachine (41) sur la base d'une vitesse de rotation du générateur de gaz (3) ou du générateur électrique (2), de la fréquence du générateur électrique (2) ou d'une anticipation de charge pour chaque chaîne de propulsion électrique.

## Patentansprüche

1. Hybride Turbomaschine (1) umfassend einen elektrischen Generator (2), einen Gasgenerator (3), der mit einem Lufteinlass (31) und einem Auslass (32) versehen ist, sowie ein akustisches Kontrollsystem (4) umfassend eine Steuereinheit (41), zumindest einen ersten Lautsprecher (43), der an dem elektrischen Generator (2) angeordnet ist, und/oder zumindest einen zweiten Lautsprecher (45), der an dem Lufteinlass des Gasgenerators (31) angeordnet ist, und/oder zumindest einen dritten Lautsprecher (47), der an dem Auslass (32) des Gasgenerators (3) angeordnet ist, **dadurch gekennzeichnet, dass** die Steuereinheit (41) des akustischen Kontrollsystems (4) an dem elektrischen Generator (2) montiert ist und dazu ausgestaltet ist, eine elektrische Wechselstrom-Gleichstrom-Umwandlung der elektromotorischen Kraft des Stromgenerators (2) in eine regelbare Gleichspannung auszuführen, die dazu bestimmt ist, an Lasten oder an Mittel zur Speicherung von Energie verteilt zu werden.

2. Hybride Turbomaschine (1) nach Anspruch 1, wobei das akustische Kontrollsystem (4) zumindest ein erstes Mikrofon (42), das an dem elektrischen Generator (2) angeordnet und dem zumindest einen ersten Lautsprecher (43) zugeordnet ist, und/oder zumindest ein zweites Mikrofon (44), das an dem Lufteinlass (31) des Gasgenerators (3) angeordnet und dem zumindest einen zweiten Lautsprecher (45) zugeordnet ist, und/oder zumindest ein drittes Mikrofon (46) umfasst, das an dem Auslass (32) des Gasgenerators (3) angeordnet und dem zumindest einen dritten Lautsprecher (47) zugeordnet ist, wobei die Steuereinheit (41) des akustischen Kontrollsystems (4) ferner ein Kontrollmodul umfasst, das dazu ausgestaltet ist, für jeden Lautsprecher (43, 45, 47) ein an den Lautsprecher (43, 45, 47) auszugebendes Signal in Abhängigkeit von der Positionierung des Lautsprechers (43, 45, 47) und des von dem zumindest einem Mikrofon (42, 44, 46), dem er zugeordnet ist, aufgenommenen Signals zu bestimmen.

3. Hybride Turbomaschine (1) nach einem der Ansprüche 1 oder 2, umfassend zumindest einen Lufteinlasskanal (310), der den Lufteinlass (31) des Gasgenerators (3) definiert, und zumindest einen Auslasskanal (320), der den Auslass (32) des Gasgenerators (3) definiert, wobei der zumindest eine zweite Lautsprecher (45) an einer Wand des zumindest einen Lufteinlasskanals (31) fixiert ist und der zumindest eine dritte Lautsprecher (47) an einer Wand des zumindest einen Auslasskanals (320) fixiert ist.

4. Hybride Turbomaschine hybride (1) nach Anspruch 3 in Kombination mit Anspruch 2, wobei das zumindest eine zweite Mikrofon (44) an einer Wand des zumindest einen Lufteinlasskanals (310) fixiert ist, und das zumindest eine dritte Mikrofon (46) an einer Wand des zumindest einen Auslasskanals (320) fixiert ist.

5. Hybride Turbomaschine (1) nach Anspruch 2 in Kombination mit einem der Ansprüche 3 oder 4, wobei die Steuereinheit (41) des akustischen Kontrollsystems (4) analoge Verstärker, die mit Analog-Digital-Wandlern versehen sind, um verarbeitete Signale an die Lautsprecher (43, 45, 47) auszugeben und Signale von den Mikrofonen (42, 44, 46) aufzunehmen, und digitale Steuergeräte vom Typ programmierbares Logiknetzwerk oder digitaler Signalprozessor umfasst, um die digitalen Signale zu erfassen und zu verarbeiten.

6. Hybride Turbomaschine (1) nach einem der Ansprüche 1 bis 5, wobei die Steuereinheit (41) des akustischen Kontrollsystems (4) ferner eine Datenbank, welche einfache Modelle von Geräuschen umfasst, die in Abhängigkeit von den Funktionsparametern der Turbomaschine (1) erzeugt werden, und ein Bestimmungsmodul umfasst, das dazu ausgestaltet ist, für jeden Lautsprecher (43, 45, 47) ein Signal, das an den Lautsprecher (43, 45, 47) ausgegeben werden soll, in Abhängigkeit von den Funktionsparametern der Turbomaschine (1) und in Abhängigkeit von der Positionierung des Lautsprechers (43, 45, 47) zu bestimmen.

7. Hybride Turbomaschine (1) nach einem der Ansprüche 1 bis 6, umfassend eine drahtgebundene Kommunikation zwischen der Steuereinheit (41) und den Lautsprechern (43, 45, 47).

8. Hybride Turbomaschine (1) nach einem der Ansprüche 1 bis 6, umfassend eine drahtlose Kommunikation zwischen der Steuereinheit (41) und den Lautsprechern (43, 45, 47).

9. Hybride Turbomaschine (1) nach einem der Ansprüche 1 bis 8, wobei das akustische Kontrollsystem (4) in ein Steuersystem des Stromgenerators (2) integriert ist.

10. Hybride Turbomaschine (1) nach einem der Ansprüche 1 bis 9, wobei der elektrische Generator (2) eine reversible elektrische Maschine ist.

11. Luftfahrzeug mit einem elektronischen Rechner zur Leitsteuerung des Luftfahrzeugs und zumindest einer hybriden Turbomaschine (1) nach einem der Ansprüche 1 bis 10, die dem elektronischen Rechner zur Leitsteuerung zugeordnet oder in diesen integriert ist.

12. Luftfahrzeug nach Anspruch 11, wobei der elektronische Rechner zur Leitsteuerung in eine Vorrichtung zur Leitsteuerung der Turbomaschinen des Luftfahrzeugs integriert ist.

13. Luftfahrzeug nach einem der Ansprüche 10 bis 12, wobei die Steuereinheit (41) dazu ausgestaltet ist, die Verwaltung der Messungen, die von Sensoren geliefert werden, und eine Steuerung eines Systems zum Starten der Turbomaschine (1) ausgehend von einem Verwaltungsmodul des Bordnetzwerks des Luftfahrzeugs sicherzustellen.

14. Luftfahrzeug nach einem der Ansprüche 10 bis 13, wobei die Steuereinheit (41) dazu ausgestaltet ist, eine Brennstoffströmungsrate, welche die Turbomaschine (41) versorgt, auf Grundlage einer Drehzahl des Gasgenerators (3) oder des Stromgenerators (2), der Frequenz des Stromgenerators (2) oder einer Lastprognose für jede elektrische Antriebskette zu kontrollieren.

## Claims

1. A hybrid turbomachine (1) comprising an electric generator (2), a gas generator (3) equipped with an air inlet (31) and with an exhaust (32) and an acoustic monitoring system (4) comprising a control unit (41), at least a first loudspeaker (43) disposed on the electric generator (2), and/or at least a second loudspeaker (45) disposed on the air inlet of the gas generator (31), and/or at least a third loudspeaker (47) disposed on the exhaust (32) of the gas generator (3), **characterized in that** the control unit (41) of the acoustic monitoring system (4) is mounted on the electric generator (2) and is configured to make an AC-DC electrical conversion of the electromotive force of the electric generator (2) into an adjustable DC voltage intended to be distributed to loads or to energy storage means.

2. The hybrid turbomachine (1) according to claim 1, wherein the acoustic monitoring system (4) comprises at least a first microphone (42) disposed on the electric generator (2) and associated with said at least a first loudspeaker (43), and/or at least a second microphone (44) disposed on the air inlet (31) of the gas generator (3) and associated with said at least a second loudspeaker (45), and/or at least a third microphone (46) disposed on the exhaust (32) of the gas generator (3) and associated with said at least a third loudspeaker (47), the control unit (41) of the acoustic monitoring system (4) further comprising a monitoring module configured to determine, for each loudspeaker (43, 45, 47), a signal to be emitted to the loudspeaker (43, 45, 47) as a function of the positioning of the loudspeaker (43, 45, 47) and of the signal collected by said at least one microphone (42, 44, 46) with which it is associated.

3. The hybrid turbomachine (1) according to any of claims 1 or 2, comprising at least one air inlet duct (310) defining the air inlet (31) of the gas generator (3) and at least one exhaust duct (320) defining the exhaust (32) of the gas generator (3), said at least a second loudspeaker (45) being fixed on a wall of said at least one air inlet duct (31), and said at least a third loudspeaker (47) being fixed on a wall of said at least one exhaust duct (320).

4. The hybrid turbomachine (1) according to claim 3 in combination with claim 2, wherein said at least a second microphone (44) is fixed on a wall of said at least one air inlet duct (310), and said at least a third microphone (46) is fixed on a wall of said at least one exhaust duct (320).

5. The hybrid turbomachine (1) according to claim 2 taken in combination with any of claims 3 or 4, wherein the control unit (41) of the acoustic monitoring system (4) comprises analog amplifiers equipped with analog-digital converters for emitting processed signals to the loudspeakers (43, 45, 47) and collecting signals from the microphones (42, 44, 46), and digital controllers of the programmable logic array or digital signal processor type for acquiring and processing the digital signals.

6. The hybrid turbomachine (1) according to any of claims 1 to 5, wherein the control unit (41) of the acoustic monitoring system (4) further comprises a database including simple noise models generated as a function of the operating parameters of the turbomachine (1), and a determination module configured to determine, for each loudspeaker (43, 45, 47), a signal to be emitted to the loudspeaker (43, 45, 47) as a function of the operating parameters of the turbomachine (1) and as a function of the positioning of the loudspeaker (43, 45, 47).

7. The hybrid turbomachine (1) according to any of claims 1 to 6, comprising a wired communication between the control unit (41) and the loudspeakers (43, 45, 47).

8. The hybrid turbomachine (1) according to any of claims 1 to 6, comprising a wireless communication between the control unit (41) and the loudspeakers (43, 45, 47).

9. The hybrid turbomachine (1) according to any of claims 1 to 8, wherein the acoustic monitoring system (4) is integrated into a control system of the electric generator (2).

10. The hybrid turbomachine (1) according to any of claims 1 to 9, wherein the electric generator (2) is a reversible electric machine.

11. An aircraft comprising an Electronic Engine Control Unit of the aircraft and at least one hybrid turbomachine (1) according to any of claims 1 to 10 associated with or integrated into said Electronic Engine Control Unit of the aircraft.

12. The aircraft according to claim 11, wherein said Electronic Engine Control Unit is integrated into a Full Authority Digital Engine Control of the turbomachines of the aircraft.

13. The aircraft according to any of claims 10 to 12, wherein the control unit (41) is configured to ensure the management of the measurements provided by sensors and a command of a system for starting the turbomachine (1) from a module for managing the on-board network of the aircraft.

14. The aircraft according to any of claims 10 to 13, wherein the control unit (41) is configured to monitor a fuel flow rate supplying the turbomachine (41) based on a rotational speed of the gas generator (3) or of the electric generator (2), on the frequency of the electric generator (2) or on a load anticipation for each electric propulsion chain.
